Europäisches Patentamt

European Patent Office

Office européen des brevets

(19)

(11) Veröffentlichungsnummer: **0 112 929**
**B1**

(12) **EUROPÄISCHE PATENTSCHRIFT**

(45) Veröffentlichungstag der Patentschrift:
**13.05.87**

(51) Int. Cl.⁴: **B 65 G 43/02,** B 65 G 39/02

(21) Anmeldenummer: **82111729.8**

(22) Anmeldetag: **17.12.82**

(54) Anlage zur Überwachung der Funktion von Bandtragrollen in Gurtförderern.

(43) Veröffentlichungstag der Anmeldung:
**11.07.84 Patentblatt 84/28**

(45) Bekanntmachung des Hinweises auf die Patenterteilung:
**13.05.87 Patentblatt 87/20**

(84) Benannte Vertragsstaaten:
**AT BE CH DE FR GB IT LI LU NL SE**

(56) Entgegenhaltungen:
**DE - A - 2 619 335
DE - A - 2 803 143
DE - A - 3 106 568
US - A - 4 311 226**

(73) Patentinhaber: **Erbö-Maschinenbau Erley & Bönninger GmbH & Co. KG, D-4322 Sprockhövel (DE)**

(72) Erfinder: **Otto, Herbert, Brockenberg 11,
D-4322 Sprockhövel 2 (DE)**

(74) Vertreter: **Herrmann-Trentepohl, Werner, Dipl.-Ing.,
Schaeferstrasse 18, D-4690 Herne 1 (DE)**

ACTORUM AG

## Beschreibung

Die Erfindung betrifft eine Anlage zur Überwachung der Funktion von Tragrollen in Gurtförderern, vorzugsweise des Bergbaus während der Förderung entsprechend dem Oberbegriff des Anspruchs 1. Eine solche Anlage ist aus der DE-AS 31 06 568 bekannt.

Der Gurt von Förderbändern liegt im fördernden und im rücklaufenden Trum auf Tragrollen und versetzt diese während der Förderung in Drehung. Die meisten Tragrollen sind als Lostrommeln auf einer feststehenden Achse mehrfach kugelgelagert und mit Lagerabdichtungen versehen. Wenn solche Tragrollen das Ende ihrer Lebensdauer erreichen oder wenn sie Fabrikationsfehler aufweisen, sind sie in der Regel nicht mehr funktionstüchtig. Ihr Antrieb durch den umlaufenden Fördergurt kann zu Beschädigungen des Gurtes oder zur Wärmeentwicklung in der betreffenden Tragrolle führen. Wenn die Bandanlage brennbares Material fördert und auch noch in einer brandgefährdeten Umgebung eingesetzt ist, können Funktionsausfälle einzelner oder mehrer Tragrollen die Ursache von Störungen und den damit verbundenen Folgeschäden sein. Unter solchen Voraussetzungen sind vor allem Gurtförderer des Untertagebetriebes, vorzugsweise im Steinkohlenbergbau eingesetzt.

Normalerweise werden Gurtförderer deshalb laufend überwacht und auf blockierte oder unrund laufende Tragrollen kontrolliert. Diese Überwachung ist bei gemuldeten Fördergurten schwierig, weil der Gurt im gemuldeten Trum auf Mulden- oder Girlandenrollensätzen läuft, indem mehrere Tragrollen miteinander zusammenwirken, von denen die innen liegenden Tragrollen schwer zu erkennen sind. Auch aus anderen Gründen kann häufig eine grössere Anzahl von Tragrollen nicht ausreichend eingesehen werden, um etwaige Funktionsfehler einwandfrei zu erkennen. Je ausgedehnter die Förderanlage ist, umso zeitraubender werden solche Feststellungen. Es kommt hinzu, dass bei derart überwachten Tragrollen Funktionsstörungen erst festgestellt werden können, wenn sie bereits eingetreten sind. Daher können trotz ordnungsgemässer Kontrolle der Tragrollen die mit Funktionsstörungen verbundenen Folgeschäden häufig nicht rechtzeitig verhindert werden.

Daher ist im Stand der Technik (DE-OS 28 03 143) vorgeschlagen worden, zur Temperaturüberwachung der Stützrollen von im Untertagebergbau betriebenen Förderbandanlagen einen NTC-Widerstand enthaltende Messwertfühler, die über eine Ringleitung durch eine Konstantstromquelle mit elektrischer Energie versorgt werden, an den Stützrollen anzuordnen. Eine derartige Anordnung jat jedoch den Nachteil, dass bei der Vielzahl der benötigten NTC-Widerstände und deren Verschaltung bzw. Verdrahtung Fehler auftreten können, die dazu führen, dass ein permanenter fehlerfreier Betrieb der Gurtförderanlage nicht gewährleistet ist, zumal die NTC-Widerstände in Bezug auf ihre elektrischen Eigenschaften, wenn auch geringfügig, so doch voneinander abweichen.

Wenn man davon ausgeht, dass die Funktionsstörungen der Tragrollen durch Fehler in der Lagerung der Lostrommel verursacht werden und dass Lagerschäden in der Tragrolle stets mit Temperaturänderungen verbunden sind, könnte eine Messung der Lagertemperatur auf elektrischem bzw. elektronischem Wege zur Erzeugung eines Störsignales führen, das zentral empfangen und ausgewertet werden kann. Die Umsetzung dieses Konzeptes in die Praxis stösst jedoch auf erhebliche Schwierigkeiten. Einerseits werden diese Schwierigkeiten durch die herkömmliche Tragrollenkonstruktion verursacht. Die feststehende Achse der bekannten Tragrollen ist hauptsächlich aus Festigkeitsgründen ein aus Vollmaterial abgedeckter Körper, der an seinen Enden mit je einer Schlüsselfläche versehen ist, die sich in den Tragböcken der Bandkonstruktion abstützt und das Mitdrehen der Achse bei umlaufender Lostrommel ausschliesst. Um in den Bereich der Kugellager vorzudringen, müsste die Achse von ihrer Stirnseite her aufgebohrt werden. Das setzt eine Reihe von ausserordentlich schwierigen Bearbeitungsvorgängen voraus, welche den Gesamtaufwand erheblich vergrössern würden. Bei den erwähnten Mulden- bzw. Girlandenrollensätzen wäre es zudem schwierig, die Verdrahtung der inneren Tragrollen nach aussen zu führen, weil die aussen angeordneten Tragrollen im Wege sind.

Es ist deshalb in der US-PS 43 11 226 vorgeschlagen worden, dass als feststehende Rollenachsen Rohre dienen, die jeweils unter sich gleiche Endlängen mit je einem Übergang in einen Mittelteil von grösserem Aussendurchmesser aufweisen, wobei die Kugellager des in bekannter Weise auf den Endlängen gelagerten Rollenkörpers auf den Übergängen abgestützt sind.

Andererseits stösst die praktische Verwirklichung des beschriebenen Überwachungskonzeptes auf Schwierigkeiten, die ihren Grund in der grossen Anzahl von Tragrollen haben, welche bei mehr oder weniger ausgedehnten Gurtförderanlagen im Betrieb gehalten werden müssen. So muss man bei Bergwerken in der Regel von mindestens 100 000 Tragrollen ausgehen, die im Betrieb gehalten werden müssen. Die Schwierigkeit besteht nicht so sehr in der Verarbeitung einer sehr grossen Anzahl von Störsignalen, sondern in deren Aufnahme und Fortleitung, weil unter anderem die dazu erforderlichen Signalströme nicht mehr im eigensicheren Bereich von Signalanlagen gehalten werden können. Bekanntlich bedeutet der für den Bereich des grubengasgefährdeten Bergbaus geprägte Begriff der Eigensicherheit, dass die Signalströme im Kurzschlussfall nicht stark genug sind, um damit an sich zündfähige Gasgemische zur Verpuffung bzw. zur Explosion zu bringen.

Die (aus der DE-A-31 06 568 bekannte) elektrooptische Signalwandlung mit nachfolgender Signalauswertung vermeidet zwar die geschilderte Schwierigkeit in der Weise, dass das ausgehende Lichtsignal auf eine Thermosubstanz trifft, welche auf der Bandoberfläche angebracht ist und bei Erwärmung durch eine erhitzte Tragrolle einen Farbumschlag liefert, der das Lichtsignal wandelt. Das gewandelte Signal läuft durch eine Filterplatte bzw. einen Polarisationsfilter. Mit einer dieser Vorrichtungen wird ein Störsignal erzeugt, welches ausgewertet wird. Die Auswertung besteht im allgemeinen darin, die erhitzte Tragrolle zu suchen und zu kühlen, um sie bei stillgesetzter Förderanlage schliesslich auswechseln zu können.

Nachteilig ist indessen, dass diejenige Tragrolle bzw. diejenigen Tragrollen, welche sich unzulässig erwärmt haben, nicht eingemessen werden. Das Aufsuchen dieser Gefahrenquellen dauert häufig viel zu lange. Auch führt die Signalwandlung über die Thermosubstanz auf der Bandoberfläche zu zeitlicher Verzögerung der Störsignalbildung, weil sie voraussetzt, dass die betreffende Tragrolle bereits eine erhebliche Temperaturerhöhung erfahren hat, um die für den Farbumschlag erforderliche Temperaturdifferenz zu erzeugen.

Der Erfindung liegt daher die Aufgabe zugrunde, eine Anlage zu schaffen, bei der jede Tragrolle auf einfache Weise so ausgebildet ist und rationell kontrolliert wird, dass auftretende Funktionsfehler frühzeitig ermittelt und gefahrlos weitergegeben werden können.

Die Lösung dieser Aufgabe erfolgt erfindungsgemäss mit den Merkmalen des Anspruches 1. Zweckmässige Ausführungsformen der Erfindung sind in den Unteransprüchen wiedergegeben.

Gemäss der Erfindung werden die Tragrollen in besonderer Weise so ausgebildet, dass ihre Rollenachsen zur Temperaturüberwachung Verwendung finden können. Gemäss der Merkmalsgruppe b werden Luftdruckschwankungen, die sich innerhalb der Bandtragrollen ausbilden können, von der Bildung von Störsignalen ausgeschlossen. Damit verbleiben als Störsignale im wesentlichen Temperaturschwankungen im Rolleninneren und mechanische Schwingungen, die als physikalisch messbare Grössen bereits beginnende Lagerschäden und damit verbundene Funktionsstörungen anzeigen. Diese Grössen werden auf einer Messstrecke aufgenommen, die der Lichtwellenleiter bildet, der Amplitude und Phasenlage des auf der Messstrecke fortgeleiteten Lichtes beeinflusst und dadurch die beschriebenen physikalischen Analogstörsignale produziert. Gemäss dem Merkmal c werden die auf diese Weise ausgebildeten Störsignale entweder unmittelbar, d.h. ohne weitere Fortleitung empfangen oder mit an die Messstrecken anschliessenden Lichtwellenleitern über grössere Entfernungen unverändert bzw. zusammen mit weiteren Störsignalen anderer Tragrollen fortgeleitet, bevor sie an den Leitungsendeinrichtungen ankommen, von der das Licht ausgehen kann.

Die Erfindung hat zunächst den Vorteil, dass die Anlage bereits geringfügige Funktionsstörungen erkennen und melden kann, die betroffene Tragrolle identifiziert und auf diese Weise die Voraussetzungen dafür schafft, dass funktionsgestörte Tragrollen rechtzeitig ausgewechselt werden, bevor Folgeschäden entstehen. Die erfindungsgemässe Anlage arbeitet vollständig automatisch und daher rationell. Sie eignet sich aufgrund der in ihr verwirklichten Tragrollenkonstruktion für alle Gurtbandarten und insbesondere für solche mit Mulden-bzw. Girlandenrollensätzen. Die Anlage kann je nach Anordnung und Anzahl ihrer Messstrecken mit Lichtwellenleitern einzelne oder alle Tragrollen einzeln oder zu mehreren überwachen. Die Fehlersignalfortleitung ist unproblematisch, weil sie optisch erfolgt und elektrische Ströme erst ausserhalb der Bandanlage vorgesehen sind, die sich im eigensicheren Bereich halten lassen. Der neuartige Aufbau der Rollenachsen, welcher diese Vorteile erst ermöglicht, eignet sich allgemein für Tragrollen wegen seiner grösseren Stabilität und der Möglichkeit der Einsparung von Gewichten mit Hilfe der Hohlachse.

Die Merkmale der Ansprüche 2 bis 7 kennzeichnen bevorzugte Ausführungen des Merkmales a der erfindungsgemässen Lösung. Da mindestens die Merkmale der Ansprüche 3 bis 5 einschliesslich nicht nur der Verwirklichung der übrigen Lösungsmerkmale der Erfindung, insbesondere der Merkmalsgruppe b ermöglichen, sondern auch die Vorteile der grösseren Festigkeit der Rollenachse ergeben, die sich mit dem Vorteil erleichterter Bearbeitung durch Fortfall des Abdrehens der Rollenachsen bei Verwendung von Rundmaterial verbinden, können diese Merkmale zusammen mit dem Merkmal a auch selbständig, d.h. ausserhalb einer Überwachungsanlage in nicht überwachten Gurtförderanlagen verwirklicht werden.

Das Merkmal des Anspruches 2 ermöglicht auf einfache Weise die Herbeiführung gleicher Luftdrücke zwischen der Lostrommel und dem Inneren der hohlen Rollenachse unter Berücksichtigung der bei umlaufender Lostrommel eintretenden Verformungen der Kugellagerabdichtung. Insbesondere die das Kugellager innen abdichtende, mit dem Aussenring des Kugellagers umlaufende Dichtung führt Bewegungen aus, welche eine Pumpwirkung auf den Luftinhalt der Tragrolle ausüben und normalerweise den Luftdruck verändern. Solche Luftdruckänderungen lassen sich infolge des Luftdruckausgleiches von der Erzeugung von Störsignalen ausschliessen.

Die Merkmale des Anspruches 3 gestatten den völligen oder teilweisen Verzicht auf Abdreharbeiten an den Endlängen der Rollenachsen. Die dort für die Kugellagerabdichtung notwendigen Durchmesser und Wandstärkenänderungen lassen sich vielmehr rationell durch Rollen bzw. Walzen der nahtlosen Rohrabschnitte herbeiführen. Vorzugsweise sind deshalb die im Anspruch 4 wiedergegebenen Merkmale der Rollenachse verwirklicht. Die Erfindung lässt sich ausser mit geschweissten auch mit Tragrollen verwirklichen, welche gemäss den Merkmalen des Anspruches 5 in bekannter Weise mit Rohren und eingesetzten Endkappen verwirklicht sind.

In den folgenden Unteransprüchen sind Merkmale von Ausführungsarten der erfindungsgemässen Anlage aufgeführt, welche sich durch unterschiedliche Führungen der Lichtwellenleitermessstrecken und der Lichtwellenleiter, die zur Fortleitung der Störsignale Verwendung finden, sowie der damit zusammenwirkenden Leitungsendeinrichtungen unterscheiden.

Im folgenden wird daher die Erfindung anhand mehrerer Ausführungsarten der erfindungsgemässen Anlage näher beschrieben; es zeigen

Fig. 1 in abgebrochener Darstellung und im Längsschnitt ein Ende einer Tragrolle gemäss der Erfindung,

Fig. 2 in der Fig. 1 entsprechender Darstellung einen Muldenrollensatz gemäss der Erfindung,

Fig. 3 schematisch die Darstellung von Teilen der Überwachungsanlage gemäss der Erfindung an einem Muldenrollentragsatz nach Art der Fig. 2;

Fig. 4 in der Fig. 3 entsprechender Darstellung eine abgeänderte Ausführungsform der erfindungsgemässen Anlage,

Fig. 5 mehrere eine Messstrecke bildende Lichtwellenleiter bei einer weiteren Ausführungsart der erfindungsgemässen Anlage,

Fig. 6 in der Fig. 5 entsprechender Darstellung eine Ausführungsart der erfindungsgemässen Anlage,

Fig. 7 in den Fig. 5 und 6 entsprechender Darstellung eine abgeänderte Ausführungsform der Erfindung,

Fig. 8 in den Fig. 5 bis 7 entsprechender Darstellung eine weiter abgeänderte Ausführungsform der Erfindung und

Fig. 9 in den Fig. 5 bis 8 entsprechender Darstellung eine abgeänderte Ausführungsform der Erfindung.

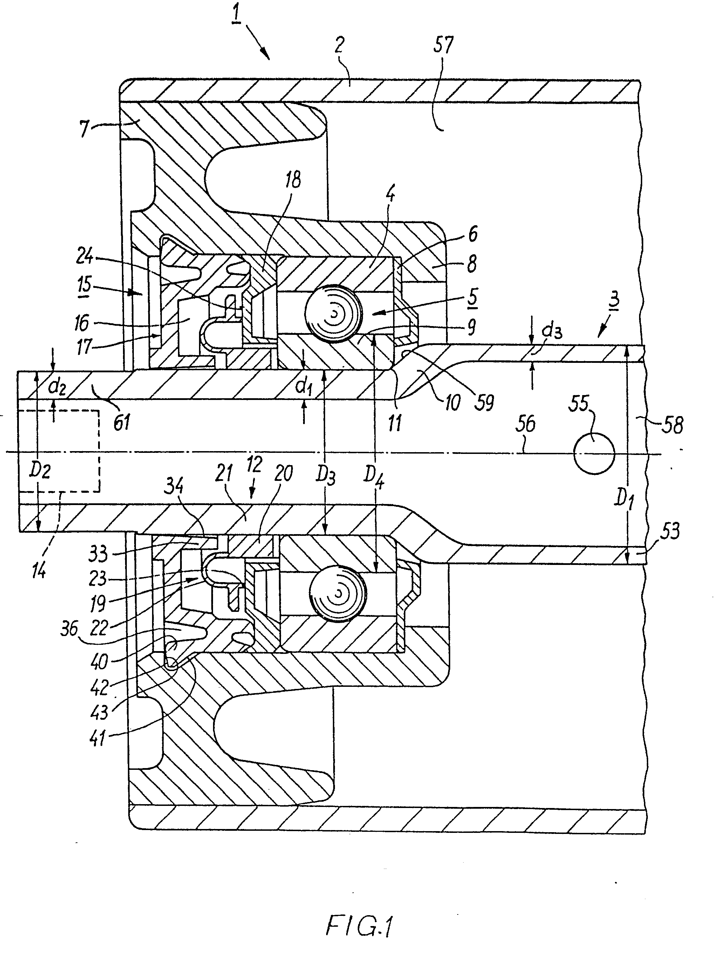

Eine Tragrolle 1 weist bei der in Figur 1 ersichtlichen Ausführungsart eine von einem Rohrabschnitt 2 gebildete Lostrommel auf, welche an beiden Enden in gleicher Weise auf einer allgemein mit 3 bezeichneten Rollenachse gelagert ist.

Zu diesem Zweck ist in jedem Ende des Rohres 2 eine Endkappe 7 befestigt. Diese besteht aus Stahl. Die Kappe 7 ruht auf dem Aussenring 4 eines Kugellagers 5, dessen Innenseite mit einer ringförmigen Dichtung 6 auf einem nach innen gerichteten Ringflansch 8 der Endkappe 7 abgestützt ist. Der innere Lagerring 9 des Kugellagers 5 stützt sich auf der ringförmigen Schulter eines Überganges 10 bei 11 der feststehenden Rollenachse 3 ab. Der Endabschnitt 12 der Achse 3 weist je eine um einen Halbkreis gegeneinander versetzte Abflachungen 14 auf. Diese bilden tangentiale Aussparungen auf der Oberseite des hohlen Endabschnittes 12 und halten als Schlüsselflächen die Achse 3 bei Drehung des von dem Rohrabschnitt 2 gebildeten Rollenkörpers gegen Mitdrehen fest.

Zum Schutz des Lagers 5 dient eine Blockdichtung 15, deren Einzelheiten aus der Fig. 1 hervorgehen. Diese Blockdichtung weist eine mit Schmierfett gefüllte Kammer 16 auf, die stirnseitig mit einer Endkappe 17 abgeschlossen ist und auf der gegenüberliegenden inneren Seite mit einem Flächendichtring 18 verschlossen ist. Die Abschlusskappe 17 und der Flächendichtring 18 schliessen einen Lippendichtring 19 ein, der mit seinem Ringkörper 20 auf dem zwischen dem inneren Abschnitt der Achse 3 und dem Endabschnitt 12 gelegenen zylindrischen Abschnitt 21 festgesetzt wird. Mit dem Ringkörper 20 bildet eine gebogene Dichtlippe 22 eine Baueinheit, die an einer Dichtlippe 23 endet, die sich auf der Innenseite 24 des Flächendichtringes 18 abstützt.

Die Abschlusskappe 17 hat einen zentralen Flansch 33 mit nach innen ansteigender innerer Begrenzungsfläche 34, welche sich mit der Losrolle zusammen um die Achse dreht. Eine Ringnut 36 begrenzt einen Aussenflansch 40 mit einer schräg nach aussen ansteigenden Flanschfläche 41. Die Stirnseite 42 des so gebildeten Aussenflansches 40 stützt sich auf der Innenfläche 43 eines Innenflansches der Einsatzkappe 7 ab, wenn die Lageranordnung nach Fig. 1 montiert ist.

Zur Fertigmontage wird die Blockdichtung 15 mit einem in die Ringnut 36 eingesetzten Werkzeug über den zylindrischen Abschnitt 21 axial in die Endkappe 7 eingepresst, bis der Aussenflansch 40 in der beschriebenen Weise einrastet. Dabei ergibt sich eine axiale Vorspannung. Im übrigen ist die Blockdichtung für die gesamte Lebensdauer der Losrolle vorgesehen. Nach der Montage stützt sich ausserdem der Flächendichtring 18 auf dem Kugellager 5 ab.

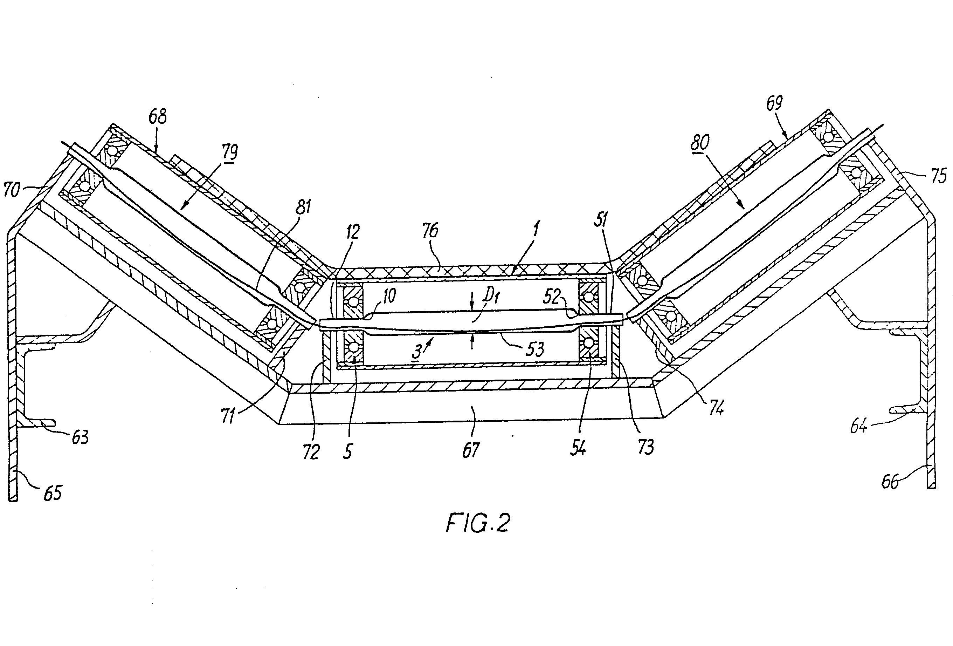

Die Rollenachse ist entsprechend der schematischen Darstellung der Fig. 2 ausser den bei den Endabschnitten 12, 51 von gleicher Länge und den dazugehörigen Übergängen 10 bzw. 52 einen Mittelteil 53 von demgegenüber grösserem Aussendurchmesser D1, wobei die Kugellager 5 bzw. 54 wie am Beispiel des Kugellagers 5 in Fig. 1 dargestellt, auf den Übergängen 10, 52 abgestützt sind. Im übrigen ist in der Darstellung der Fig. 2 die Dichtungsanordnung, die vorstehend im Zusammenhang mit der Fig. 1 beschrieben worden ist, der Einfachheit halber weggelassen.

Wie ferner aus der Fig. 1 ersichtlich ist, weist der Mittelteil 53 des die Rollenachse 3 bildenden Rohres in seinem Mittelabschnitt eine oder mehrere als Bohrungen im Ausführungsbeispiel verwirklichte Aussparungen auf, von denen eine bei 55 dargestellt ist. Die Mittelachse 56 dieser Bohrung fluchtet mit der Mittelachse der einen Abflachung 14, so dass die offene Fläche der Aussparung 55 im wesentlichen parallel zur Schlüsselfläche der Abflachung 14 verläuft.

Durch die Pumpwirkung der Dichtungsanordnung und insbesondere der Dichtung 6 entsteht bei der Drehung der Lostrommel im Inneren 57 des Rohrabschnittes 2 ein Druckunterschied gegenüber dem Druck im Inneren 58 der Rohrachse 3. Durch die Aussparung 55 wird ein Druckausgleich herbeigeführt, so dass auch im Inneren der Bandtragrolle ein dem Aussenluftdruck entsprechender Luftdruck erzielt wird.

Die Rollenachse 3 besteht im übrigen aus Abschnitten eines nahtlos gezogenen Rohres, dessen Endabschnitte 12 bzw. 51 durch Vergrösserung ihrer Wandstärke $d_1$ bzw. $d_2$ auf einen gegenüber dem eine geringere Wandstärke $d_3$ auf-

weisenden Mittelabschnitt 64 geringeren Aussendurchmessers D2, D3 gebracht sind.

Die Übergänge 10 bzw. 52 sind aussen kegelstumpfförmig entsprechend der Fläche 59 in Fig. 1. In den Übergängen 10 vergrössert sich die Wandstärke praktisch kontinuierlich ausgehend von dem Mittelteil 53 bis zum anschliessenden Endabschnitt 12. Dabei ist der Aussendurchmesser D1 etwas geringer als der Aussendurchmesser D4 des Innenlagerringes des abgestützten Kugellagers 5 bzw. 54.

Jeder Endabschnitt 12, 51 ist aus zwei eine Baueinheit miteinander bildenden zylindrischen Abschnitten 21 bzw. 61 zusammengesetzt. Der Endabschnitt 12 liegt unter der zugeordneten Endkappe 7 und ist im Aussen- und Innendurchmesser etwas grösser gehalten. Er nimmt die beschriebene Abdichtung des Kugellagers auf. Der äussere Abschnitt 61 ist dagegen im Aussen- und demgemäss auch der Innendurchmesser vermindert und weist auf gegenüberliegenden Seiten die Abflachungen 14 auf, welche die Schlüsselflächen für die Rollenhalterung bilden.

Diese Rollenhalterung ist am Beispiel des Muldenrollensatzes der Fig. 2 wiedergegeben. Danach sitzen auf zwei parallelen Längsträgern 63, 64 des in seinen Einzelheiten nicht näher dargestellten Gurttraggerüstes die aus Blech bestehenden Wangen 65, 66 eines Rollenbockes, die eine abgewinkelte profilierte Traverse 67 halten. Auf dieser sind für jede der Rollen 1 bzw. 68, 69 Lagerbleche 70 bis 75 angeordnet, welche mit entsprechend gestalteten Ausschnitten die Abschnitte 61 der Rollenachsen 3 aufnehmen. Durch die abgewinkelte Anordnung der beiden aussen liegenden Tragrollen 68 und 69 gegenüber der mittleren Tragrolle 1 des Muldenrollensatzes entsteht die Muldung des Bandtraggurtes 76.

Durch die hohlen Rollenachsen 3 bzw. 79, 80 ist ein Lichtwellenleiter 81 hindurchgeführt. Er dient als Messstrecke zur Umformung physikalischer Grössen, welche eine beginnende Laufrollenstörung anzeigen.

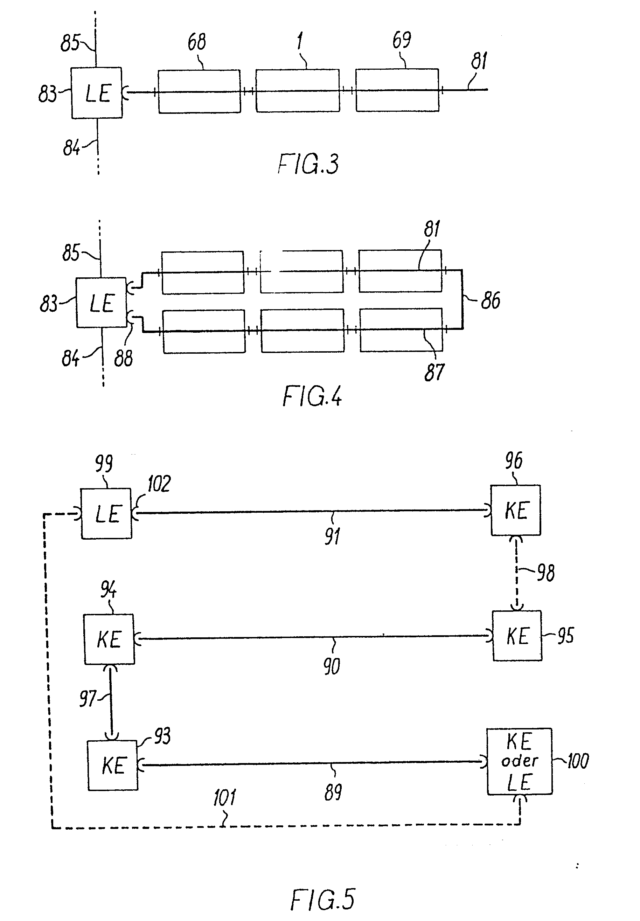

Gemäss der schematischen Wiedergabe des Gegenstandes der Fig. 2 in der Fig. 3 ist der durch die Tragrollen 1 sowie 68 und 69 hindurchgeführte Lichtwellenleiter 81 an eine Leitungsendeinrichtung (LE) angeschlossen, die schematisch bei 83 in Fig. 3 wiedergegeben ist. Diese Leitungsendeinrichtung 83 enthält einen elektrooptischen Signalwandler sowie eine Lichtsendeeinrichtung. Die von dem Signalwandler empfangenen Signale werden über Kabel 84, 85 an eine nicht dargestellte Auswerteeinrichtung weitergegeben. Diese Einrichtung misst die Amplitude und die Phasenlage des übertragenen Signals und erkennt daraus Leitungsunterbrechungen, sowie Temperaturschwankungen der Tragrollen 1, 69 und 68 in der Regel bereits, wenn diese an den Tragrollenlagern entstehen, also bevor die Lager versagen. Ausserdem ist die Auswerteeinrichtung in der Lage, den Ort des Bandes, die Einsatzstelle des Muldenrollensatzes auf der Bandlänge und die Position der Tragrollen etwa in einem Muldenrollensatz des Oberbandes zu erkennen.

Die Auswerteeinrichtung kann ferner Schwingungen aus den bei 84 und 85 übertragenen Signalen erkennen, die in den Rollenachsen entstehen. Sie kann diese Grössen mit den anderen Messwerten und mit Sollwerten vergleichen. Bei Über- bzw. Unterschreitung der Sollwerte wird ein Störsignal abgegeben, das optisch angezeigt oder aufgezeichnet werden kann, um rechtzeitig Reparaturmassnahmen einzuleiten.

Die Leitungsendeinrichtung 83 im Ausführungsbeispiel der Fig. 4 wird zusammen mit einem Lichtwellenleiter 81 verwendet, der an seinem Ende 86 abgeknickt ist und durch einen nicht dargestellten weiteren Muldenrollensatz mit einem weiteren Lichtwellenleiter 87 hindurchgeführt ist, um seinerseits an der gleichen Leitungsendeinrichtung bei 88 zu enden.

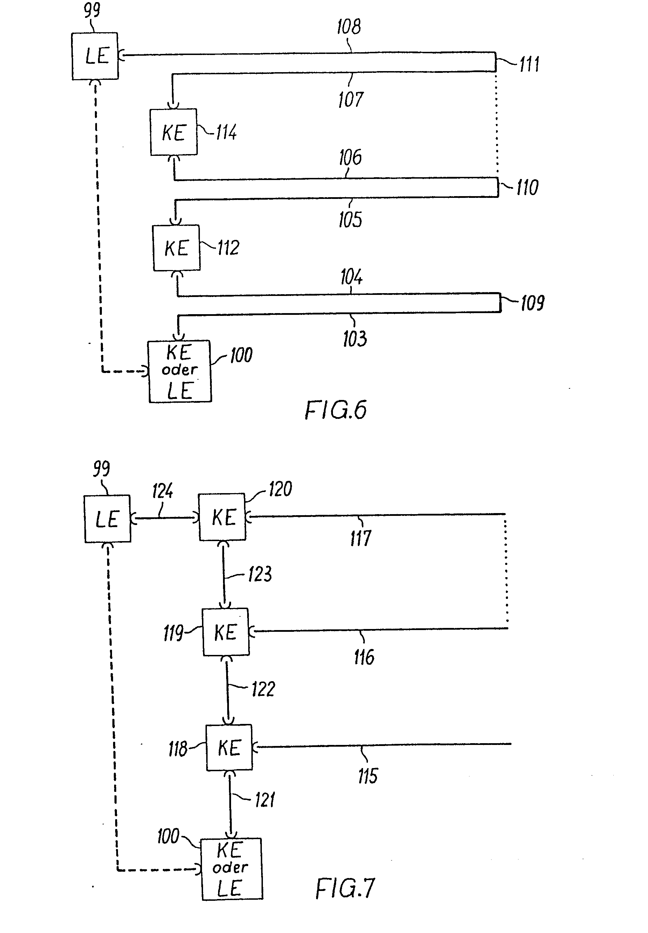

Im Ausführungsbeispiel der Fig. 5 sind mehrere Lichtwellenleiter 89 bis 91, die ihrerseits in Muldenrollen- bzw. Girlandenrollensätzen bzw. Einzelrollen verlegt sein können, über Koppelelemente (KE) 93 bis 96 und Verbindungsstücke 97, 98 von Lichtwellenleitern, welche die Messstrecken miteinander verbinden, hintereinandergeschaltet. Die beiden am Anfang und am Ende der Anlage angeordneten Lichtwellenleiter 89 und 91 sind jeweils an eine Leitungsendeinrichtung 99 bzw. 100 angeschlossen und beide Leitungsendeinrichtungen 99, 100 sind über einen Lichtwellenleiter 101 untereinander verbunden, so dass die aufgenommenen Störsignale zentral von einer Leitungsendeinrichtung verarbeitet werden können.

In den Ausführungsformen der Fig. 3 bis 5 sind die Lichtwellenleiter 81, 87 und 89 bis 91, welche Messstrecken bilden, in Kabeln untergebracht, was auch für die Verbindungsstücke 97, 98 gilt. Diese Kabel weisen an ihren Enden Stecker auf, von denen einer bei 102 (Fig. 5) wiedergegeben ist. Die Koppelelemente 93 bis 96 können Stecker miteinander verbinden, das Signal in mehrere Lichtwellenleiter gleichzeitig einstreuen oder das Signal als vom Sender angesteuerte optische oder elektrische Schalter in unterschiedliche Lichtwellenleiter einleiten. Solche Koppelelemente können ferner so ausgebildet werden, dass sie ein übertragenes Signal zwischenregenerieren.

Im Ausführungsbeispiel der Fig. 6 wird die Anordnung nach Fig. 4 zur Hintereinanderschaltung mehrerer eine Messstrecke bildenden Lichtwellenleiter 103 bis 108 mit Knickstellen 109 bis 111 benutzt, wobei zwischen den Koppelelementen 112, 114 besondere Zwischenstücke zur Übertragung der Lichtwellen entfallen. Im übrigen entspricht die Ausführung nach Fig. 6 dem Ausführungsbeispiel der Fig. 5.

Im Ausführungsbeispiel nach Fig. 7 sind dagegen Messstrecken bildende Lichtwellenleiter 115 bis 117 über Koppelelemente 118 bis 120 und Zwischenstücke 121 bis 124 von Lichtwellenleitern parallelgeschaltet und an die Leitungsendeinrichtungen 99 bzw. 100 angeschlossen.

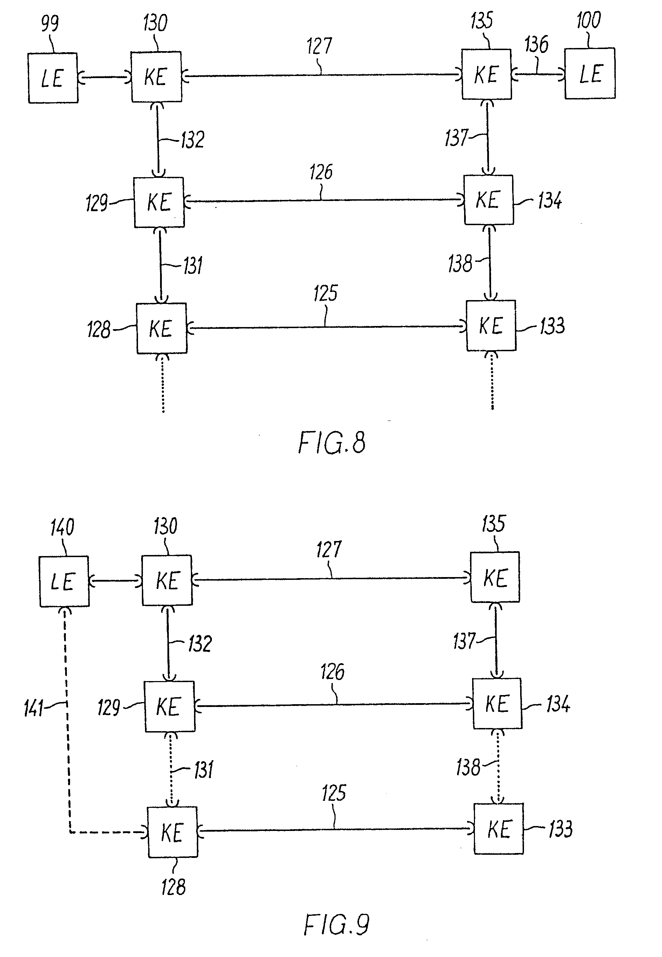

Bei der Anordnung nach Fig. 8 sind Lichtwellenleiter 125 bis 127, die Messstrecken bilden, an beiden Enden über Koppelelemente 128 bis 130, die untereinander mit Verbindungsstücken 131, 132 von Lichtwellenleitern verbunden sind bzw. Koppelelemente 133 bis 135 und Verbindungsstücke 136 bis 138 von Lichtwellenleitern an die Leitungsendeinrichtungen 100 bzw. 99 angeschlossen.

Im Ausführungsbeispiel der Fig. 9 sind dagegen die eine Messstrecke bildenden Lichtwellenleiter 125 bis 127 mit einer zentralen Leitungsendeinrichtung 140 verbunden. Der strichpunktiert angedeutete Lichtwellenleiter 141 kann diese Endeinrichtung 140 mit dem Koppelelement 128 verbinden. In diesem Fall können unter Umständen die Lichtwellenleiter 131 und 138 entfallen.

Die Leitungsendeinrichtungen können entweder eine Sendeeinrichtung oder eine Empfangseinrichtung mit oder ohne nachgeschaltete Auswerteeinrichtung aufweisen. Sende- und Empfangseinrichtung können miteinander kombiniert sein, wobei auch die Sende- und Empfangseinrichtung mit der nachgeschalteten Auswerteeinrichtung kombiniert werden kann.

Eine Endeinrichtung kann aber auch lediglich aus einem Signalreflektor bestehen, wenn sie mit einer zentralen Auswerteeinrichtung zusammenwirkt.

Abweichend von dem dargestellten Ausführungsbeispiel ist die Anlage ferner so ausgebildet, dass die die Rollenachse bildenden Rohre einen elliptischen Querschnitt aufweisen und dass die Tragrolle derart eingebaut wird, dass die längere Achse im wesentlichen senkrecht zur Gurtebene verläuft.

Vorzugsweise geht man dabei so vor, dass die Ebenen der Schlüsselflächen parallel zur längeren Achse des Querschnittes verlaufen.

**Patentansprüche**

1. Anlage zur Überwachung der Funktion von Bandtragrollen (1, 68, 69) in Gurtförderern, vorzugsweise des Bergbaus während der Förderung mit Hilfe elektrooptischer Signalwandlung und Auswertung, welche Amplitude und Phasenlage der einkommenden Lichtsignale misst, mit Sollwerten vergleicht und ausgibt oder weiterleitet, gekennzeichnet durch folgende Merkmale:
a) Als feststehende Rollenachsen dienen Rohre (3), die jeweils unter sich gleiche Endlängen (12, 51) mit je einem Übergang (10, 52) in einen Mittelteil (53) von grösserem Aussendurchmesser (D1) aufweisen, wobei die Kugellager (5) des auf den Endlängen (12, 51) gelagerten Rollenkörpers auf den Übergängen (12, 51) abgestützt sind;
b) in dem Innenraum (58) des die Rollenachse bildenden Rohres (3) welches mit einem Ausgleich des in ihm herrschenden Luftdruckes mit dem im Innenraum (57) der Tragrolle (1, 68, 69) herrschenden Luftdruckes versehen ist, ist ein Lichtwellenleiter (81) angeordnet, der als Messstrecke für Temperaturschwankungen und/oder der in den Rollenachsen (3) mechanisch entstehenden Schwingungen einer oder mehrerer in einem Rollensatz zusammenwirkender Tragrollen (1, 68, 69) dient;
c) der Lichtwellenleiter (81) ist entweder unmittelbar oder über Koppelelemente (KE) mit weiteren in verlegten Lichtwellenleitern (81, 87, 89 bis 91, 125 bis 127) an eine Leitungsendeinrichtung (83, 99, 100, 140) angeschlossen, die das Licht aussendet und das Licht empfängt sowie als Signalwandler und Auswerter dient.

2. Anlage nach Anspruch 1, dadurch gekennzeichnet, dass die Rollenachsen bildenden Rohre (3) in ihren Mittelteilen (53) einen Ausgleich des jeweiligen Luftdruckes im Rohrinneren (58) mit dem Umgebungsluftdruck herbeiführende Aussparungen (55) aufweisen, die parallel zu Schlüsselflächen (14) angeordnet sind.

3. Anlage nach einem der Ansprüch 1 oder 2, dadurch gekennzeichnet, dass die Rollenachsen aus Abschnitten nahtlos gezogener Rohre (3) bestehen, deren Endlängen (12, 51) durch Vergrösserung ihrer Wandstärke (d1, d2) gegenüber der geringeren Wandstärke des Mittelabschnittes (53) auf verminderte Aussendurchmesser (D2, D3) gebracht sind.

4. Anlage nach einem der Ansprüche 1 bis 3, dadurch gekennzeichnet, dass die Übergänge (10, 52) aussen kegelstumpfförmig sind und in den Übergängen (10, 52) die Wandstärke im wesentlichen kontinuierlich ausgehend von dem Mittelabschnitt (53) bis zur anschliessenden Endlänge (12, 51) vergrössert ist, wobei der Aussendurchmesser (D1) des Mittelabschnittes (53) gleich oder geringer als der Aussendurchmesser (D4) des Innenlagerringes (9) des abgestützten Kugellagers (5) ist.

5. Anlage nach einem der Ansprüche 1 bis 4, dadurch gekennzeichnet, dass bei mit einem die Lostrommel (2, 3) bildenden Rohr (3) und eingesetzten Endkappen (7) verwirklichten Rollenkörper die die Rohrachse verwirklichenden Rohre (3) Endlängen (12, 51) aufweisen, die aus zwei einteiligen axialen Abschnitten bestehen, deren innerer, von der zugeordneten Endkappe überdeckter Abschnitt (21) einen gegenüber dem äusseren Abschnitt (61) grösseren Aussendurchmesser (D3) und grösseren Innendurchmesser aufweist und die Abdichtung des Kugellagers (5) aufnimmt, während der äussere, im Aussendurchmesser (D2) und im Innendurchmesser verkleinerte Abschnitt (61) aussen eine bzw. auf gegenüberliegenden Seiten mehrere tangentiale Abflachungen (14) aufweist, die Schlüsselflächen für die Rollenhalterung bilden.

6. Anlage nach einem der Ansprüche 1 bis 5, dadurch gekennzeichnet, dass die in einer oder in mehreren Rollenachsen verlegten Lichtwellenleiter (81, 87, 89 bis 91, 125 bis 127) parallel oder hintereinander geschaltet sind.

7. Anlage nach einem der Ansprüche 1 bis 6, dadurch gekennzeichnet, dass die in den Rollenachsen (3) verlegten Lichtwellenleiter (81) an einem Ende der Messstrecke offen sind oder eine Knickstelle (86) als Verbindung zu einem weiteren, eine Messstrecke bildenden Lichtleiter (87) aufweisen.

8. Anlage nach einem der Ansprüche 1 bis 7, dadurch gekennzeichnet, dass die Lichtwellenleiter (81, 87, 89 bis 91, 125 bis 127) an ihren Enden mit Steckern (102) versehen sind.

9. Anlage nach einem der Ansprüche 1 bis 8, gekennzeichnet durch Koppelelemente (KE), welche Lichtwellenleiter (81, 87, 89 bis 91, 126 bis 127, 97, 98, 131 bis 136) miteinander verbinden oder Lichtsignale in mehrere mit ihnen verbundene Lichtwellenleiter gleichzeitig einsteuern oder Lichtsignale als vom Sender der Leitungsendeinrichtung (LE) angesteuerte optische bzw. elektrische Schalter in mit ihnen verbundene Lichtwellenleiter einleiten oder ein Lichtsignal zwischenregenerieren.

10. Anlage nach einem der Ansprüche 1 bis 9, dadurch gekennzeichnet, dass die die Rollenachse bildenden Rohre einen elliptischen Querschnitt aufweisen, und dass die Bandtragrolle derart eingebaut wird, dass die längere Achse der Ellipse im wesentlichen senkrecht zur Gurtebene verläuft.

## Revendications

1. Installation de surveillance du fonctionnement de rouleaux de support (1, 68, 69) de convoyeurs à bande, de préférence d'exploitations minières, pendant le transport, à l'aide d'une conversion électro-optique et d'une évaluation des signaux, qui mesure l'amplitude et la position de phase des signaux lumineux arrivants, les compare à des valeurs de consigne et les émet en sortie ou les envoie plus loin, caractérisée par les caractéristiques suivantes:

a) pour constituer les axes fixes des rouleaux, on utilise des tubes (3) qui présentent chacun des longueuers d'extrémité égales (12, 51) et comprenant chacune une région de transition (10, 52) avec une partie centrale (53) de diamètre extérieur (D1) plus important, les roulements à billes (5) du corps de rouleau montés sur les longueurs d'extrémité (12, 51) s'appuyant sur les régions de transition (10, 52);

b) on dispose dans l'espace interne (58) du tube (3) formant l'axe des rouleaux, qui est muni d'un dispositif d'égalisation de la pression de l'air régnant à l'intérieur avec la pression de l'air régnant dans l'espace interne (57) des rouleaux de support (1, 68, 69), un guide d'ondes lumineuses (81) qui sert de parcours de mesure pour des variations de température et/ou des oscillations apparaissant mécaniquement dans les axes (3) d'un ou plusieurs rouleaux de support (1, 68, 69) coopérant dans un jeu de rouleaux;

c) le guide d'ondes lumineuses (81) est raccordé soit directement, soit par l'intermédiaire d'éléments de couplage (KE) à d'autres guides d'ondes lumineuses (81, 87, 89 à 91, 125 à 127) disposés dans les rouleaux de support ou à l'extérieur des rouleaux de support, à un dispositif d'extrémité de ligne (83, 99, 100, 140), qui envoie la lumière et reçoit la lumière et sert également de transducteur de signaux et d'évaluateur.

2. Installation selon la revendication 1, caractérisée en ce que les tubes (3) formant les axes des rouleaux comprennent dans leurs parties centrales (53) des évidements (55) permettant l'égalisation de la pression de l'air régnant à l'intérieur des rouleaux (58) avec la pression de l'air environnant, et qui sont disposés parallèlement à des surfaces de verrouillage (14).

3. Installation selon la revendication 1 ou 2, caractérisée en ce que les axes des rouleaux sont constitués par des portions de tube (3) étirées et sans couture, dont les longueurs d'extrémité (12, 51), ont une épaisseur de paroi ($\underline{d1}$, $\underline{d2}$) plus importante que celle, plus faible, de la partie centrale (53) pour les amener à un diamètre extérieur plus faible (D2, D3).

4. Installation selon l'une quelconque des revendications 1 à 3, caractérisée en ce que les régions de transition (10, 52) sont constituées sous forme de troncs de cône orientés vers l'extérieur et en ce que l'épaisseur de paroi dans les régions de transition (10, 52) va en augmentant de façon sensiblement continue en partant de la partie centrale (53) jusqu'aux longueurs d'extrémité qui s'y raccordent (12, 51), le diamètre extérieur (D1) de la partie centrale (53) étant égal ou inférieur au diamètre extérieur (D4) de l'anneau interne (9) du roulement à billes (5) qu'il supporte.

5. Installation selon l'une quelconque des revendications 1 à 4, caractérisée en ce que, dans le cas où le corps de rouleaux est réalisé au moyen d'un tube (3) formant cylindre fou (2, 3) et de capuchons d'extrémité (7) introduits dans celui-ci, corps qui présente les longueurs d'extrémité (12, 51) de tubes (33) réalisant l'axe du tube et constitués par deux portions axiales d'un seul tenant, dont la portion cylindrique (21) qui est à l'intérieur et que recouvre le capuchon d'extrémité associé présente un diamètre extérieur (D3) et un diamètre intérieur plus importants que ceux de la portion extérieure (61) et reçoit la garniture d'étanchéité du roulement à billes (5), alors que la portion extérieure (61), dont le diamètre extérieur (D2) et le diamètre intérieur sont plus petits, comprend à l'extérieur, sur ses côtés opposés, plusieurs à-plats tangentiels (14) qui forment des sections de verrouillage pour la monture du rouleau.

6. Installation selon l'une quelconque des revendications 1 à 5, caractérisée en cè que des guides d'ondes lumineuses (81, 87, 89 à 91, 125 à 127) disposés dans un ou plusieurs axes des rouleaux sont montés en parallèle ou les uns à la suite des autres.

7. Installation selon l'une quelconque des revendications 1 à 6, caractérisée en ce que les guides d'ondes lumineuses (81) disposés dans les axes (3) des rouleaux sont ouverts à une extrémité du parcours de mesure ou présentent une position coudée (86) pour réaliser la liaison avec un autre conducteur de lumière (87) formant un parcours de mesure.

8. Installation selon l'une quelconque des revendications 1 à 7, caractérisée en ce que les guides d'ondes lumineuses (81, 87, 89 à 91, 125 à 127) sont munis à leurs extrémités de fiches (102).

9. Installation selon l'une quelconque des revendications 1 à 8, caractérisée par des éléments de couplage (KE) qui relient les uns aux autres des guides d'ondes lumineuses (81, 87, 89 à 91, 126 à 127, 97, 98, 131 à 136) ou bien injectent des signaux lumineux simultanément dans plusieurs guides d'ondes lumineuses qui leur sont reliés, ou bien envoient des signaux lumineux dans des guides d'ondes lumineuses qui leur sont reliés en tant que commutateurs optiques ou électriques commandés par l'émetteur du dispositif d'extrémité de ligne (LE), ou régénèrent entre temps un signal lumineux.

10. Installation selon l'une quelconque des revendications 1 à 9, caractérisée en ce que les tubes formant les axes des rouleaux présentent une section transversale elliptique et en ce que les rouleaux de support du convoyeur à bande sont constitués de manière que l'axe le plus long de l'ellipse soit sensiblement perpendicualire au plan de la bande porteuse.

**Claims**

1. A device for monitoring the function of belt-supporting rollers (1, 68, 69) in belt conveyors, particularly in mining, while conveying is in progress, with the aid of electro-optical sig nal conversion and detection which measures the amplitude and phase condition of the incoming light signals, compares them with specified values and distributes them or passes them on, characterised by the following features:

a) tubes (3) are employed as fixed roller axles which each have end portions (12, 51) which are equal in length and which each merge at a transition (10, 52) into a centre section (53) of greater external diameter (D1), while the ball-races (5) of the roller body which is carried on the end portions (12, 51) are supported on the transitions (12, 51;

b) there is fitted within the interior (58) of the tube (3) forming the roller axle, within which the internal air pressure is equalised with the air pressure within the interior (57) of the supporting roller (1, 68, 69), an optical conductor (81) which serves as a measuring section for temperature fluctuations and/or the vibrations mechanically induced in the roller axles (3) of one or more supporting rollers (1, 68, 69) operating together in a set of rollers;

c) the optical conductor (81) is connected, either directly or via coupling elements (KE), with additional optical conductors (81, 87, 89 to 91, 125 to 127) located within or outside the supporting rollers, to a line terminal device (83, 99, 100, 140) which emits and receives light and thus serves as both a signal transducer and detector.

2. A device according to claim 1, characterised in that the tubes (3) forming the roller axles have, in their centre sections (53), cutouts (55) disposed parallel to key flats (14), which bring about equalisation of the prevailing air pressure in the tube interior (58) with the ambient air pressure.

3. A device according to one of claims 1 or 2, characterised in that the roller axles consists of sections of tubes drawn seamlessly, whose end portions (12, 51) are reduced to an external diameter (D2, D3) by increasing their wall thickness (d1, d2) relative to the lesser wall thickness of the centre section (53).

4. A device according to one of claims 1 to 3, characterised in that the transitions (10, 52) have the form of a truncated cone externally, and in the transitions (10, 52) the wall thickness is increased essentially continuously from the centre section (53) to the adjacent end portion (12, 51), in which connection the external diameter (D1) of the centre section (53) is equal to or less than the external diameter (D4) of the inner bearing ring (9) of the supported ball-race (5).

5. A device according to one of claims 1 to 4, characterised in that with roller bodies made up with a tube (3) forming the loose drum (2, 3) and inserted end caps (7), the tubes (3) constituting the tube axle have end portions (12, 51) which consist of two single-part axial sections, of which an inner section (21), covered by the fitted end cap, has a greater external diameter (D3) and a greater internal diameter relative to an outer section (61) and accommodates the sealing of the ball-race (5), while the outer section (61), reduced in external diameter (D2) and in internal diameter, has externally a tangential flat surface or several tangential flat surfaces (14) on opposite sides which form key flats for the roller mounting support.

6. A device according to one of claims 1 to 5, characterised in that the opticla conductors (81, 87, 89 to 91, 125 to 127) located within one or several roller axles are connected in parallel or in series.

7. A device according to one of claims 1 to 6, characterised in that the optical conductors (81) located in the roller axles (3) are open at one end of the measuring section or exhibit a kink (86) as a connection to a further optical conductor (87) forming a measuring section.

8. A device according to one of claims 1 to 7, characterised in that the optical conductors (81, 87, 89 to 91, 125 to 127) are provided with plugs (102) at their ends.

9. A device according to one of claims 1 to 8, characterised by coupling elements (KE) which connect optical conductors (81, 87, 89 to 91, 126 to 127, 97, 98, 131 to 136) to one another, or which direct light signals simultaneously into several optical conductors connected to them, or which act as optical or electrical switches controlled by the emitter of the line terminal device (LE) to introduce light signals into optical wave conductors connected to them or to subject a light signal to intermediate regeneration.

10. A device according to one of claims 1 to 9, characterised in that the tubes forming the roller axles have an elliptical cross-section, and that the belt-supporting roller is installed in such a way that the longer axis of the ellipse runs essentially normal to the plane of the belt.

FIG.1

2/5

FIG.2

3/5

FIG.3

FIG.4

FIG.5

4/5

FIG.6

FIG.7

5/5

FIG.8

FIG.9